# EUROPEAN PATENT SPECIFICATION

(11) **EP 3 748 413 B1**
(45) Date of publication and mention of the grant of the patent: **29.07.2026**
(21) Application number: 19177970.1
(22) Date of filing: 03.06.2019
(51) Int. Cl.: G02B 21/16, G02B 21/36

(54) **CONTROL UNIT FOR A MICROSCOPE, MICROSCOPE SYSTEM INCLUDING SUCH CONTROL UNIT AND METHOD OF EXAMINING A SAMPLE**
STEUERUNGSEINHEIT FÜR EIN MIKROSKOP, MIKROSKOPSYSTEM MIT SOLCH EINER STEUERUNGSEINHEIT UND VERFAHREN ZUR UNTERSUCHUNG EINER PROBE
UNITÉ DE COMMANDE POUR MICROSCOPE, SYSTÈME DE MICROSCOPE COMPRENANT UNE TELLE UNITÉ DE COMMANDE ET PROCÉDÉ D'EXAMEN D'UN ÉCHANTILLON

(43) Date of publication of application: 09.12.2020
(60) Divisional application: 26175810.6
(73) Proprietor: Leica Microsystems CMS GmbH, 35578 Wetzlar (DE)
(72) Inventor: Bingel, Marco, 35274 Kirchhain (DE); Dr. Pelzer, Patric, 35576 Wetzlar (DE)
(74) Representative: Maiwald GmbH

(56) References cited:
- DE-A1- 102014 102 080
- JP-A- 2007 133 419
- JP-A- 2010 020 075
- US-A1- 2007 133 086
- US-A1- 2010 201 800
- US-A1- 2015 278 625
- ANONYMOUS: "ZEISS Celldiscoverer7 Your Automated Platform for Live Cell Imaging", 18 March 2019 (2019-03-18), XP055643816, Retrieved from the Internet <URL:https://pages.zeiss.com/rs/896-XMS-794/images/ZEISS-Microscopy_Product-Brochure_ZEISS-Celldiscoverer-7.pdf> [retrieved on 20191119]
- TERCLAVERS SVEN: "Focus Strategies with ZEN2 ZEISS Embedded 3D Imaging Specialist", 13 June 2018 (2018-06-13), XP055918100, Retrieved from the Internet <URL:https://hcbi.fas.harvard.edu/files/hcbidoug/files/lunchlearn_-_focus_strategies_in_zen2.pdf> [retrieved on 20220504]
- QUANG LONG PHAM ET AL: "Open-Source Matlab-Based Graphical User Interface (GUI) For Computer Control of Microscopes Using Micro-Manager", ARXIV.ORG, CORNELL UNIVERSITY LIBRARY, 201 OLIN LIBRARY CORNELL UNIVERSITY ITHACA, NY 14853, 26 April 2019 (2019-04-26), XP081370782

## Description

### Field

The present inventive concept generally relates to microscope imaging and, more particularly, to adjusting microscope components in a user friendly way and a related method and microscope system.

### Background

Microscopes, particularly fluorescence microscopes are used for viewing and/or recording images of samples containing fluorescent substances with a view to examining sample structures. Fluorescent substances have the property of emitting light with a longer wavelength (emission light) than the light with which they are illuminated or excited (excitation light). In a typical fluorescence microscope, a fluorescent structure is magnified and imaged using a microscope objective and tube. The corresponding image can be viewed directly through an eyepiece or indirectly using a camera. Such a typical fluorescence microscope and further developments thereof are described in DE 10 2013 206 466 B4.

A method of acquiring images with a microscope is disclosed in DE 10 2014 102 080 A1. In the method described therein, as image acquisition parameters of a camera the signal offset, gain and integration time are adjusted in dependence on the image quality of the acquired image.

US 2015/278625 A1 relates to automated robotic microscopy systems, wherein settings of microscope components are adjusted automatically, depending on sample specific information. JP 2007 133419 A relates to a control device of a microscope that, based on input from a user, automatically adjusts settings of the microscope. JP 2010 020075 A relates to an automated operation of a microscope according to a characteristic of a sample, said operation being guided by an operation guide display screen. US 2007/133086 A1 relates to automatically optimizing the wavelengths or wavelength ranges and other characteristics of illumination light of a microscope, depending, for example, on a dye type. US 2010/201800 A1 relates to a microscope system, which, in particular based on attributes of a specimen, automatically sets system parameters. Further, TERCLAVERS, Sven. Focus Strategies with ZEN2. 13 June 2018, discloses that the choice of focus strategy may depend on "Cells adhering to bottom", "Cells not adhering to bottom", and "Free floating in solution", among others. Moreover, PHAM, Quang Long et al. Open-Source Matlab-Based Graphical User Interface (GUI) For Computer Control of Microscopes Using µManager. ARXIV.ORG, 26 April 2019, https://doi.org/10.48550/arXiv.1904.13231, discloses a "GUI" where a user can specify how frequently the autofocus takes place during the acquisition. In said GUI, the stage parameters "Speed" and "Start Speed" can also be adjusted.

### Summary

Modern microscopes, particularly also fluorescence microscopes, usually do have a large number of microscope components which can be adjusted. For example, the proper excitation wavelength has to be selected, a suitable intensity of the illuminating light has to be adjusted, the region of interest has to be selected, the corresponding focus and magnification has to be set; and, in fluorescence microscopes having a sample chamber, the proper sample atmosphere has to be chosen. At the same time, a time efficient examining method is required. Hence, there is a need for an improved user-friendly operating concept for such microscopes.

The invention is defined by the independent claims. Embodiments of the present inventive concept provide a control unit for a microscope for examining a sample, comprising a user interface configured to receive information about the sample, wherein the control unit is configured to, depending on the information received, automatically adjust one or more microscope components of the microscope. Typically, the user interface is a graphical user interface configured to receive information which is input by a user. It is, however, also possible that information about the sample is gathered by a measurement and that results of this measurement are transferred in the form of sample information to the user interface. Such measurements can provide information on specific sample characteristics without the need of a user inputting such information into the user interface. Also both ways of receiving such information, i.e. by user input and by sample measurements, are possible. Depending on the information about sample properties received through the user interface, the control unit is configured to automatically adjust one or more microscope components of the microscope.

"Microscope components" in the meaning of the present application are exemplarily listed further below. The term "microscope" is particularly related to, but not restricted to a fluorescence microscope. By way of example, the present application particularly relates to fluorescence microscopes but is not limited thereto. Exemplary information about the sample, i.e. sample properties or characteristics which can be quantified or classified, are also given below. With a control unit according to embodiments of the present invention, microscope components of a microscope can be adjusted automatically in the best possible way adapted to the sample to be examined by the microscope. Thus, less user interactions for adjusting microscope components and less user interactions with the control software are necessary and the workflow for a microscopy sample examination is strongly simplified. Further, the danger of maloperation is reduced and, at the same time, also operators with little technical experience are enabled to use a highly sophisticated microscope for examining a sample.

According to a second aspect of the present invention, a microscope system is provided comprising a microscope and a control unit as described above for adjusting microscope components of the microscope. The above explanations as well as further embodiments and advantages connected thereto apply to the microscope system according to the second aspect in the same manner as for the control unit according to the first aspect.

According to a third aspect, a method for controlling a microscope is provided, said method comprising the steps of receiving information about a sample to be examined by means of the microscope and,
depending on the information received, automatically adjusting one or more microscope components of the microscope for examining the sample. Advantageously, the microscope components are adjusted by means of a control unit, in particular by means of the control unit according to the first aspect, wherein at least one information about the sample to be examined is received by the control unit via a user interface of the control unit and wherein one or more microscope components are automatically adjusted by means of the control unit depending on the at least one received information about the sample. Again, in order to avoid repetitions, reference is made to the first and second aspects concerning embodiments and advantages of the method according to the third aspect.

In a preferred embodiment, the control unit is configured to, depending on the information received, automatically choose a predetermined value for a setting of at least one of a microscope component. According to this embodiment, it is possible that some or even all microscope components required for a specific examination of a sample are automatically set in the best possible way for carrying out the examination.

Alternatively or additionally, in a preferred embodiment, the control unit is configured to, depending on the information received, restrict possible values for a setting of at least one of the microscope components. In this embodiment, the respective microscope component can only be operated in a limited range of operational parameters. For example, depending on the nature of a sample, it might be necessary or at least reasonable to limit the range of illumination intensity for illuminating the sample.

By restricting possible values for a setting of at least one of the microscope components, it is preferred to limit a user to only choose from non-excluded values for such a setting. In this case, the restriction leads to excluded values of operational parameters of the microscope components and to non-excluded values, only the latter one can be accessed by a user. Further, additionally or alternatively, by restricting possible values the control unit is preferably limited to only choose non-excluded values for the setting of at least one of the microscope components. Thus, the limitation to only non-excluded values applies to a user and/or to the system itself. In the latter case, e.g. a system with auto-illumination can only choose within a restricted range of values for adjusting the intensity of illumination.

As already discussed above, information about the sample can also be gathered by a measurement of the sample, i.e. of sample characteristics. Thus, in a preferred embodiment based on such a measurement, it is possible to not only set a restricted range of possible values for microscope components settings but also, after having set such a value, to choose a different value for the setting within the range of non-excluded values, depending on the measurement. This embodiment is especially advantageous if a sample alters its characteristics during the measurement. It allows the system to flexibly react to such a change of characteristics by adapting the value for setting microscope components accordingly.

In another preferred embodiment, the control unit is configured to, depending on the sample information received, automatically choose a predetermined value for a setting of at least one of the microscope components, wherein the predetermined value is at least one variable of at least one arithmetic function. In many applications, a microscope component is controlled by an arithmetic function which may or may not be a linear function. In such cases, the predetermined value is not directly used for the setting of a microscope component but transferred via an arithmetic function to a corresponding setting value. On the other hand, in a similar embodiment, the predetermined value can be at least one variable of at least one feedback optimization function. For example, in a microscope system having an auto-exposure illumination system, if the auto-exposure sensor detects a decrease of illumination, the system readjusts the illumination intensity by means of a feedback optimization function in order to optimize the overall illumination. In the following, possible and preferred information about the sample are listed.

According to the independent claims, information about the sample comprises characterization as a living or non-living sample. In addition, information about the sample may comprise at least one of the following:
- assignment of the acquired images to a project and/or series of examinations;
- designation of the sample or sample type to be examined;
- type of sample carrier;
- possible position, arrangement and/or dimensions of the sample on the sample carrier;
- dyes used on the sample;
- designation of the corresponding structures in the dyed sample.

Depending on such information about the sample received by the user interface of the control unit, the following adjustments of one or more microscope components can be made in addition to setting or restricting parameters of a motorized stage and setting, parametrizing, or restricting an autofocus function:
- selecting an excitation wavelength or wavelength range;
- selecting an excitation filter;
- selecting an emission filter;
- selecting an emission wavelength or wavelength range;
- selecting a detection wavelength or wavelength range
- parametrizing a spectral unmixing algorithm;
- setting or restricting an excitation intensity;
- parametrizing optimization functions;
- setting or restricting parameters for a multilayer/3D/z-stack image acquisition function;
- setting or restricting environmental conditions at the sample;
- selecting a microscope objective or restricting the use of available microscope objectives;
- selecting a region of interest in the sample;

As already stated above, without restricting the scope of invention, fluorescence microscopes are in particular discussed in the present application.

In the present application, microscope components are to be understood as not including an image acquisition detector of the microscope. It can, however, be advantageous if, depending on the received sample information, the control unit is further configured to set or restrict at least one of the detector parameters of an image acquisition detector of the microscope. The at least one detector parameter includes at least one of the following parameters: an integration time, a sensitivity, a gain, an exposure time, an offset and an image processing function such as binning, of the image acquisition detector of the microscope.

In the following, examples will be described of how specific microscope components may automatically be adjusted depending on exemplary sample information. It should be noted that the examples wholly or in part can be combined with each other, especially as in practice more than only one sample information can be input or transferred to the control unit.

In a first example, a "project name" and/or a "sample name" can be input by a user, wherein the project name describes an assignment of the acquired images to a project and/or series of examinations and the sample name describes the designation of the sample or a sample type to be examined. In some cases, the project name or the sample name itself may be sufficient to define at least some settings of microscope components, especially in case of a series of examinations on the same sample types. In the same manner, not only an automatic adjustment of microscope components can be performed but also an automatic adjustment of one or more detector parameters of an image acquisition detector of the microscope. The project and/or sample name maybe used to reload settings from previous experiments. Additionally, may the name be searched for keywords that prefill following dialogs (e.g. the selection of carrier type).

In a second example, depending on the type of sample carrier some microscope components can automatically be adjusted. The type of sample carrier can e.g. be input by a user e.g. by making a selection from a menu given by a graphical user interface. The possible carrier types may be "slide", "petri dish", "well plate" or "custom". Depending on the different carrier types, the control unit automatically sets or restricts parameters of a motorized stage, e.g. sets a maximal velocity, a maximal acceleration and/or a maximal deceleration and may also restrict the travel range of the microscope stage by limiting the range to the actual possible sample positions. Furthermore, depending on the type of sample carrier, the control unit can set, parametrize or restrict an autofocus function of the microscope as such autofocus functions generally depend on the type of sample carrier. Moreover, depending on the type of sample carrier, the control unit may select the objective of the microscope or restrict the use of available objectives. Typically, the objectives to be used in a sample examination also depend on the type of sample carrier. In addition to the above, the control unit may adjust other microscope components depending on the given type of sample carrier.

According to an aspect of the invention, the sample information refers to a possible position, arrangement and/or dimension of the sample on the sample carrier. Some samples sediment or are placed on the bottom of a sample carrier and can thus be characterized as "Bottom", while other samples may be examined in the form of a suspension. In the first case, the sample dimensions, especially in the direction of the optical axis (z-direction), during examination are well-defined, while in the second case of a suspension, all three spatial directions can alter during examination. Apart from "Bottom" or "Suspension", other sample characteristics can be useful. Depending on such possible position, arrangement and/or dimension characteristics, the control unit is configured to set, parametrize or restrict an autofocus function of the microscope, and/or set or restrict parameters for multilayer/3D/z-stack image acquisition functions, e.g. by setting or restricting the z-range, the step size or the number of z-levels of such image acquisition functions. Furthermore, the control unit can select a microscope restrict the use of available microscope objectives and/or select a region of interest in the sample. Typically, depending on the region of interest, the autofocus reference point has to be chosen correspondingly.

According to the invention, the sample information characterizes the sample as a "living sample" or as a "fixed sample". In case of a "living sample" the illumination intensity must not exceed a maximum value in order to protect the living sample (like living cells), especially in case of fluorescence examinations using phototoxic dyes. Further, living samples are generally prepared in a liquid solution such that high accelerations or decelerations of the motorized microscope stage should be avoided. Depending on the characterization of the sample as "fixed" or "life", the control unit may adjust at least one of the following microscope components:
The control unit can set or restrict the excitation intensity of a fluorescence microscope or, more generally, the illumination intensity. According the invention, the control unit sets or restricts parameters of a motorized stage of the microscope (see above). Furthermore, the control unit can parametrize optimization functions such as an auto-illumination or auto-exposure function of the microscope.

According to the invention, the control unit sets, parametrizes or restricts an autofocus function of the microscope. Further, the control unit can set or restrict parameters for a multi-layer/3D/z-stack image acquisition function. Again, the control unit can select the microscope objective or restrict the use of available microscope objectives. Some of the above microscope component adjustments have already been described in connection with other examples. Furthermore, especially in systems with environment control, the control unit can set or restrict the environmental conditions at the sample. Especially when using sample chambers or microscopes in a closed environment, the environmental conditions like temperature, humidity, gas mixture, pressure and atmosphere can be adjusted.

For example, the temperature, the humidity, the CO₂, and/or O₂ contents of the atmosphere can be controlled to desired values.

In a fifth example, the dyes used in the sample can be used as a sample information. In addition to this information, the specific structure stained by the dye can be specified. Depending on this information, the control unit can select an excitation wavelength or wavelength range, and/or an excitation filter, and/or an emission filter, and/or emission wavelength range of such a microscope. Furthermore, image acquisition parameters, such as exposure intensity, exposure time, gain etc. can be set or restricted and/or an auto-exposure function can be parametrized. Furthermore, the control unit can parametrize an unmixing algorithm. Such an unmixing algorithm can reduce cross-talk where a signal of one fluorophore shows up in another channel because the spectra of fluorophores overlap to a certain degree. The unmixing algorithm subtracts the signal in the wrong channel and places it back into the right channel. There are multiple ways to implement this unmixing procedure. Furthermore, the control unit can parametrize optimization functions, e.g. in an auto-illumination system, when using dynamic indicators, the dynamic detector range must be sufficient to be able to detect signal peaks. Other optimization functions could e.g. be autofocus, auto-exposure, the best step size in a z-stack, the best combination of light exposure, gain and exposure time.

It should be noted that the above examples can - wholly or in part - be combined in order to adjust as many microscope components as possible for performing a microscopic examination adapted to the sample. Further, it should be noted that in all the above examples, the control unit can be further configured to set or restrict at least one of the detector parameters of an image acquisition detector of the microscope. Important detector parameters are the gain, the exposure time and the integration time, but also image processing functions such as binning.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer connected to or comprised in a control unit of a microscope.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### Short Description of the Figures

Fig. 1 schematically shows a microscope system according to an embodiment of the present invention,
Fig. 2 schematically shows a graphical user interface which can be used in a microscope system according to Fig. 1, and
Fig.3 shows a flowchart including method steps of a method according to an embodiment of the present invention.

### Detailed Description

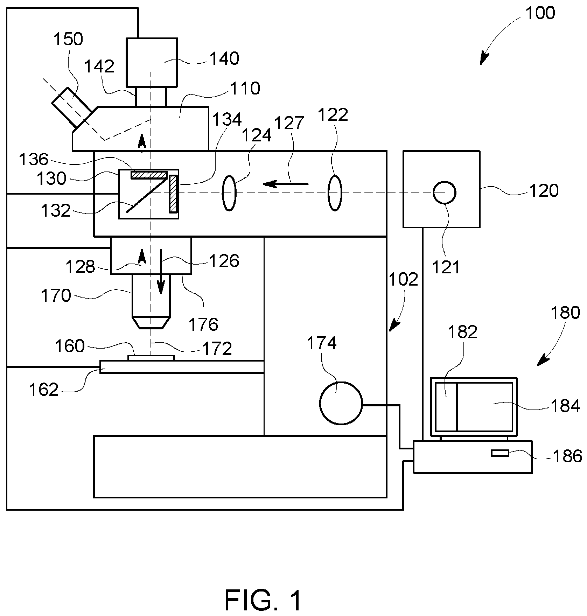

Fig. 1 schematically shows a microscope system 100 comprising a microscope 102 which is embodied as a fluorescence microscope and a control unit 180 as described below.

The microscope 102 comprises an incident light illumination unit 120 including as the main components a light source 121 and lenses 122, 124. The directions of the generated illumination beam path are designated 126 and 127. The illumination beam path is directed to the microscope objective 170 via a filter cube 130. The filter cube 130 comprises an excitation filter 134 and an emission filter 136 as well as a dichroic mirror 132. The illumination beam path thus passes the excitation filter 134 and is deflected by the dichroic mirror 132 into the direction of the optical axis 172. The illumination beam path 126 passes the microscope objective 170 to be incident upon the sample 160.

In a fluorescence microscope 102, the sample 160 is typically dyed with specific dyes in order to make structures visible which would otherwise be non-visible. In most cases, it is also possible to monitor a change over time especially of biological structures. The sample is held by a sample carrier (non shown) which is positioned on a motorized microscope stage 162. Fluorescent light emitted by the sample is imaged through the microscope 102 by its objective 170 and a tube 110 and eyepiece 150 and/or an image acquisition detector or camera 140. The camera or image acquisition detector 140 is coupled to the tube 110 by a camera adapter 142. The direction of the corresponding imaging beam path is designated 128. In order to focus the objective 170 onto the structures 160 to be imaged a focus setting knob 174 is provided for moving the objective 170 and/or the motorized microscope stage 162 in the z-direction corresponding to the main optical axis 172.

A fluorescence microscope 102 as described above is per se known by a person skilled in the art. Operating such fluorescence microscopes 102, however, requires a user to be highly experienced in the technology of such fluorescence microscopes. Particularly, a user has to set the microscope components in the best possible way in order to allow the structures of the sample to be clearly imaged. This process of setting and adjusting the microscope components is cumbersome and time consuming; further a mal-operation is likely to occur.

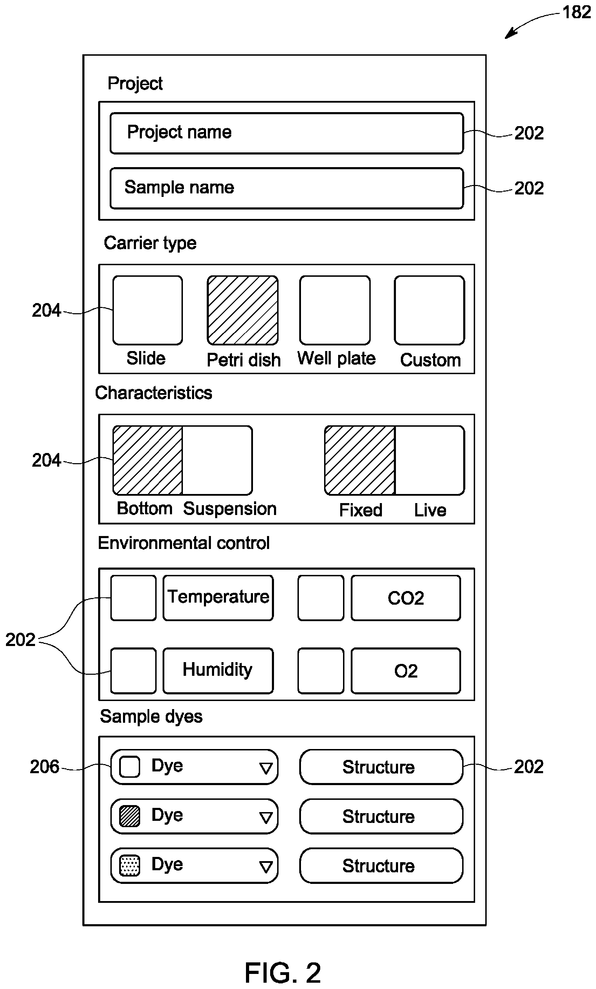

In order to automatically adjust one or more microscope components of the microscope 102 in a way adapted to the sample 160 to be examined, a control unit 180 according to an embodiment of the present invention is provided. The control unit 180 comprises a user interface 182 configured to receive information about the sample. In the present embodiment, the user interface 182 is a graphical user interface 182 as further explained in relation to Figure 2. Next to the user interface 182, there is a microscope image display 184 for displaying the imaged structures of the sample 160 on a display. The control unit 180 further comprises a processor 186 as schematically indicated in figure 1. The microscope 102 and the control unit 180 are parts of the microscope system 100 enabling a user to input information about the sample 160 via the user interface 182 resulting in an automatic adjustment of microscope components depending on the sample information by the control unit 180. The control unit 180 may be integrated into the microscope 102. On the other hand, the control unit 180 may be configured as a stand-alone device which can be connected to the microscope 102 or to any other microscope.

In order to automatically adjust the microscope components of the microscope 102, the control unit 180 is connected (shown by dashed lines) to the corresponding microscope components, in the embodiment according to Figure 1 to the focus setting knob 174, to the motorized microscope stage 162, to objective 170 and/or to the objective turret 176, to the filter cube 130 and to the illumination unit 120. Moreover, the control unit 180 can be connected to the image acquisition detector 140 in order to set or restrict at least one of the detector parameters of the image detector 140 depending on the sample information.

It should be noted that the microscope shown in Figure 1 depicts microscope components which are not necessarily needed to perform the present invention. It should also be noted that any other microscope, e.g. a confocal microscope, is also suitable for implementing the present invention.

Figure 2 schematically shows an exemplary embodiment of a graphical user interface 182 which can be used in connection with the control unit 180 as described above in connection with Figure 1. The graphical user interface 182 comprises a number of checkboxes/control fields 204, input fields 202 and menu fields 206. A person skilled in the art is free to add further kinds of fields or skip some of those fields.

Before starting an examination of the sample 160 by the fluorescence microscope 102, a user can input a number of sample properties via the graphical user interface 182 in order to enable the microscope system 100 to adapt the microscope components of the microscope 102 in the best possible way to the sample 160 to be examined. To this end, the user may input a project name and/or a sample name into the corresponding input fields 202. In this case, the project name designates an assignment of acquired images to a project and/or a series of examinations. Depending on the type of project or series of examinations, a sample may be examined using the same settings of microscope components within this project/series of examinations. The same may apply for the designation of the sample or the sample type to be examined, which is input into the input field "sample name". In a preferred embodiment, the project name offers a broader range of settings for each microscope component, which range can be further specified to specific values or a more limited range by specifying the sample name. In case of series of examinations of typical samples under the same settings, the indication of project name and sample name may be sufficient in order to automatically set the microscope components in the desired way.

On the other hand, project name and sample name can only serve the purpose of designating a project and the sample to be examined with only a few or even no settings of microscope components.

The user may then choose the carrier type used for the present sample 160 by checking one of the boxes 204, in the present embodiment "Slide", "Petri dish", "Well plate" or "Custom". By checking or clicking the corresponding checkbox 204 the control unit 180 sets of restricts parameters of the microscope stage 162, i.e. sets a maximum velocity for moving the stage 162 in case of petri dishes or well plates containing the sample in a liquid solution in order avoid a spillover. Further, the control unit 180 sets, parametrizes or restricts a autofocus function of the microscope 102 by controlling the e.g. focus setting knob 174 accordingly which knob is automatically adjusted for autofocus purposes. Furthermore, the control unit 180 may select an appropriate objective 170 and/or limit the use of available objectives 170 by controlling the objective turret 176 accordingly.

In a next step, the user inputs further sample characteristics by checking or clicking the corresponding check boxes "Bottom" or "Suspension" and/or "Fixed" or "Live". As already described above, by choosing "Suspension" the possible position, arrangement or dimensions of the sample extend to the interior of the sample carrier, while choosing "Bottom" the possible arrangement or dimensions of the sample are limited to the bottom of the sample carrier. Correspondingly, an autofocus function can be set, parametrized or restricted by automatically controlling the focus setting knob 174, a microscope objective 170 can be selected or the use of available objectives 170 can be restricted by automatically controlling the objective turret 176, a region of interest in the sample can be selected by controlling the microscope stage 162 and/or parameters for a multilayer/3D/z-stack image acquisition function can be set or restricted, e.g. by adjusting the z-range, the step size and/or z-levels.

As already described above, a living sample which is chosen by checking the box "Live" differs from a fixed sample which is chosen by checking the box "Fixed" mainly in that the living sample might change its position during examination and must be protected by limiting the illumination intensity. Correspondingly, the excitation or illumination intensity is set or restricted by automatically controlling the illumination device 120, the motorized stage parameters are set or restricted by automatically controlling the microscope stage 162, the autofocus function is set, parametrized or restricted by controlling the focus setting knob 174, and/or optimization functions like an autoillumination function are parametrized. Further, again, image acquisition functions can be automatically set or restricted. Furthermore, the appropriate objective 170 or available objectives can be chosen.

Last but not least, the environmental conditions at the sample can be set or restricted.

In order to set or restrict environmental conditions at the sample, the user can input the desired values into the input fields "Temperature", "Humidity", "CO2" and "O2". This environmental control provides an atmosphere in a sample chamber perfectly adapted to a living sample.

Various sample dyes can be chosen by clicking the corresponding menu fields 206. At the same the corresponding structure which can be imaged through the dye can be input in the corresponding input fields 202. The control unit 180 will then automatically select an excitation wavelength (range) by automatically controlling the illumination device 120 accordingly and/or select an excitation filter 134 and/or select an emission filter 136 and/or select an emission wavelength (range). It should be noted that instead of selecting the appropriate excitation filter, it might be sufficient to select the corresponding LED emitting radiation within the small excitation wavelength range. Similarly, instead of selecting an appropriate emission filter, it might be sufficient to control the image detector 140 to select a detection wavelength range corresponding to the emission wavelength range. Furthermore, as already described above, an unmixing algorithm and/or optimization functions can be parametrized.

Thus, by inputting the dye(s) used in the sample, the system can automatically adapt itself without the need of any user's adjustments of microscope components. In the example described above, it might be possible to use a cube 130 without any filters 134, 136 only comprising a dichroic mirror 132 which drastically simplifies operation of the microscope 102.

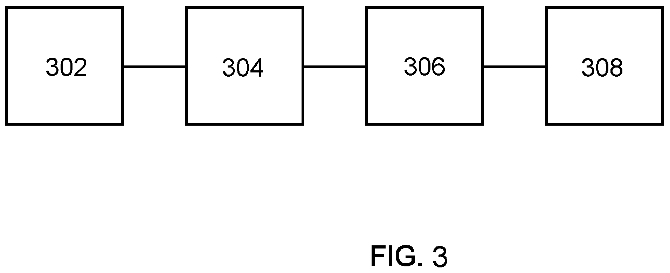

Figure 3 shows a flowchart including method steps 302 - 308 of a method according to an embodiment of the present invention.

The method for controlling a microscope comprises a step 304 of receiving information about a sample to be examined by the microscope and a step 306 wherein, depending on the information received, one or more microscope components of the microscope for examining the sample are automatically adjusted.

Advantageously, the microscope components are adjusted by means of a control unit, in particular by means of the control unit as discussed in connection with Figures 1 and 2. Particularly, the user interface is a graphical user interface configured to receive information which is input by a user in a step 302. As discussed above, it is also possible that information about the sample is gathered by a measurement and results of this measurement are transferred in the form of sample information to the user interface. Such a measurement can provide information on specific sample characteristics without the need of a user inputting such information into the user interface. Also both ways of receiving such information, i.e. by user input and by sample measurement, are possible (step 302). Depending on the information about sample properties received in step 304 one or more microscope components of the microscope are automatically adjusted in step 306. Moreover, in a step 308, at least one of the detector parameters of an image acquisition detector of the microscope can advantageously be set or restricted.

### List of reference signs

- 100: microscope system
- 102: microscope
- 110: tube
- 120: illumination unit
- 121: light source
- 122: lens
- 124: lens
- 126, 127: directions of illumination beam path
- 128: direction of imaging beam path
- 130: filter cube
- 132: dichroic mirror
- 134: excitation filter
- 136: emission filter
- 140: camera, image acquisition detector
- 142: camera adapter
- 150: eyepiece
- 160: sample
- 162: microscope stage
- 170: objective
- 172: (main) optical axis
- 174: focus setting knob
- 176: objective turret
- 180: control unit
- 182: user interface
- 184: microscope image display
- 186: processor

- 202: input field
- 204: checkbox, control field
- 206: menu field

- 302: method step
- 304: method step
- 306: method step
- 308: method step

## Claims

1. A control unit (180) for a microscope (102) for examining a sample (160), the control unit (180) comprising:
a user interface (182) configured to receive information about the sample; and
wherein the control unit is configured to, subsequently, depending on the information received, automatically adjust one or more microscope components (174, 162, 170, 176, 130, 120) of the microscope (102),
wherein the information about the sample (160) comprises:
• characterization as a living or non-living sample;
wherein the adjustment of one or more microscope components comprises:
• setting or restricting parameters of a motorized stage (162); and
• setting, parametrizing, or restricting an autofocus function.

2. The control unit (180) according to claim 1, configured to, depending on the information received, automatically choose a predetermined value for a setting of at least one of the microscope components.

3. The control unit (180) according to claim 1 or 2, configured to, depending on the information received, restrict possible values for a setting of at least one of the microscope components, particularly
wherein by restricting possible values a user and/or the control unit is limited to only choose from non-excluded values for the setting of at least one of the microscope components, particularly
wherein the control unit (180) is configured to, based on a measurement of the sample, choose a different value for the setting of at least one of the microscope components but only from non-excluded values.

4. The control unit (180) according to any one of the preceding claims as far as depending on claim 2, wherein the predetermined value for a setting of at least one of the microscope components is at least one variable of at least one arithmetic function and/or wherein the predetermined value for a setting of at least one of the microscope components is at least one variable of at least one feedback optimization function.

5. The control unit (180) according to any one of the preceding claims, wherein the information about the sample (160) further comprises at least one of the following:
• assignment of the acquired images to a project and/or series of examinations;
• designation of the sample or sample type to be examined;
• type of sample carrier;
• possible position, arrangement and/or dimensions of the sample on the sample carrier;
• dyes used on the sample;
• designation of the corresponding structures in the dyed sample.

6. The control unit (180) according to any one of the preceding claims, wherein the adjustment of one or more microscope components further comprises at least one of the following adjustments:
• selecting an excitation wavelength or wavelength range;
• selecting an excitation filter (134);
• selecting an emission filter (136);
• selecting an emission wavelength or wavelength range;
• selecting a detection wavelength or wavelength range
• parametrizing a spectral unmixing algorithm;
• setting or restricting an excitation intensity;
• parametrizing optimization functions ;
• setting or restricting parameters for a multilayer/3D/z-stack image acquisition function;
• setting or restricting environmental conditions at the sample (160);
• selecting a microscope objective (170) or restricting the use of available microscope objectives;
• selecting a region of interest in the sample (160);

7. The control unit (180) according to any one of the preceding claims, wherein depending on the received information on the sample the control unit (180) is further configured to set or restrict at least one of the detector parameters of an image acquisition detector (140) of the microscope, particularly wherein the at least one detector parameter includes at least one of the following parameters: an integration time, a sensitivity, a gain, an exposure time, an offset, an image processing function such as binning, of the image acquisition detector (140) of the microscope (102).

8. The control unit (180) according to any one of the preceding claims, as far as depending on claims 5 and 6, wherein at least one microscope component is automatically adjusted depending on at least one of the assignment of the acquired images to a project and/or series of examinations and a sample name describing the designation of the sample or sample type to be examined.

9. The control unit (180) according to any one of the preceding claims, as far as depending on claims 5 and 6, wherein depending on the type of sample carrier at least one of the following microscope component adjustments is made:
• setting or restricting parameters of a motorized stage (162);
• setting, parametrizing, or restricting an autofocus function;
• selecting the objective (170) or restricting the use of available objectives (170).

10. The control unit (180) according to any one of the preceding claims, as far as depending on claims 5 and 6, wherein, depending on the possible position, arrangement and/or dimensions of the sample on the sample carrier, at least one of the following microscope component adjustments is made:
• setting, parametrizing, or restricting an autofocus function;
• setting or restricting parameters for a multilayer/3D/z-stack image acquisition function;
• selecting a microscope objective (170) or restricting the use of available microscope objectives;
• selecting a region of interest in the sample (160).

11. The control unit (180) according to any one of the preceding claims, as far as depending on claims 5 and 6, wherein, when the sample is characterized as a "fixed sample" or a "living sample", at least one of the following microscope component adjustments is made in addition to the adjustments defined in claim 1:
• setting or restricting the excitation or illumination intensity;
• parametrizing optimization functions;
• setting or restricting parameters for a multilayer/3D/z-stack image acquisition function;
• setting or restricting the environmental conditions at the sample;
• select the objective (170) or restricting the use of available objectives.

12. The control unit (180) according to any one of the preceding claims, as far as depending on claims 5 and 6, wherein depending on dye(s) used in the sample (160) at least one of the following microscope component adjustments is made:
• selecting an excitation wavelength or wavelength range;
• selecting an excitation filter (134);
• selecting an emission filter (136);
• selecting an emission wavelength range;
• parametrizing an unmixing algorithm;
• parametrizing optimization functions.

13. A microscope system (100) comprising a microscope (102) and a control unit (180) according to any one of claims 1 to 12 for adjusting microscope components (174, 162, 170, 176, 130, 120) of the microscope (102).

14. A method for controlling a microscope (102), the method comprising:
in a first step, receiving (304), by a control unit (180) for the microscope (102), information about a sample to be examined by the microscope (102); and
depending on the information received, in a second step, automatically adjusting (306) one or more microscope components (174, 162, 170, 176, 130, 120) of the microscope (102) for examining the sample,
wherein the information about the sample (160) comprises:
• characterization as a living or non-living sample;
wherein the adjustment of one or more microscope components comprises:
• setting or restricting parameters of a motorized stage (162); and
• setting, parametrizing, or restricting an autofocus function.

15. A computer program with program code to perform the method of claim 14 when the computer program is executed on a processor (186) associated with the control unit (180) according to any one of claims 1 to 12.

## Patentansprüche

1. Steuerungseinheit (180) für ein Mikroskop (102) zum Untersuchen einer Probe (160), wobei die Steuerungseinheit (180) Folgendes umfasst:
eine Benutzeroberfläche (182), die dazu konfiguriert ist, Informationen über die Probe zu empfangen; und wobei die Steuerungseinheit dazu konfiguriert ist, anschließend, abhängig von den empfangenen Informationen, eine oder mehrere Mikroskopkomponenten (174, 162, 170, 176, 130, 120) des Mikroskops (102) automatisch anzupassen,
wobei die Informationen über die Probe (160) Folgendes umfassen:
• Charakterisierung als lebende oder nichtlebende Probe;
wobei die Justierung einer oder mehrerer Mikroskopkomponenten Folgendes umfasst:
• Einstellen oder Einschränken von Parametern eines motorisierten Objekttisches (162); und
• Einstellen, Parametrieren oder Einschränken einer Autofokusfunktion.

2. Steuerungseinheit (180) nach Anspruch 1, die dazu konfiguriert ist, abhängig von den empfangenen Informationen automatisch einen vorgegebenen Wert für eine Einstellung von mindestens einer der Mikroskopkomponenten zu wählen.

3. Steuerungseinheit (180) nach Anspruch 1 oder 2, die dazu konfiguriert ist, abhängig von den empfangenen Informationen, mögliche Werte für eine Einstellung von mindestens einer der Mikroskopkomponenten einzuschränken, insbesondere
wobei durch das Einschränken möglicher Werte ein Benutzer und/oder die Steuerungseinheit darauf beschränkt ist, nur aus nicht ausgeschlossenen Werten für die Einstellung von mindestens einer der Mikroskopkomponenten zu wählen, insbesondere wobei die Steuerungseinheit (180) dazu konfiguriert ist, basierend auf einer Messung der Probe, einen anderen Wert für die Einstellung von mindestens einer der Mikroskopkomponenten zu wählen, jedoch nur aus nicht ausgeschlossenen Werten.

4. Steuerungseinheit (180) nach einem der vorstehenden Ansprüche, soweit sie von Anspruch 2 abhängt, wobei der vorgegebene Wert für eine Einstellung von mindestens einer der Mikroskopkomponenten mindestens eine Variable von mindestens einer arithmetischen Funktion ist und/oder wobei der vorgegebene Wert für eine Einstellung von mindestens einer der Mikroskopkomponenten mindestens eine Variable von mindestens einer Feedback-Optimierungsfunktion ist.

5. Steuerungseinheit (180) nach einem der vorstehenden Ansprüche, wobei die Informationen über die Probe (160) weiter mindestens eines der Folgenden umfassen:
• Zuordnung der aufgenommenen Bilder zu einem Projekt und/oder einer Untersuchungsserie;
• Bezeichnung der zu untersuchenden Probe oder des Probentyps;
• Art des Probenträgers;
• mögliche Position, Anordnung und/oder Abmessungen der Probe auf dem Probenträger;
• auf der Probe verwendete Farbstoffe;
• Bezeichnung der entsprechenden Strukturen in der gefärbten Probe.

6. Steuerungseinheit (180) nach einem der vorstehenden Ansprüche, wobei die Justierung einer oder mehrerer Mikroskopkomponenten weiter mindestens eine der folgenden Justierungen umfasst:
• Auswählen einer Anregungswellenlänge oder eines Wellenlängenbereichs;
• Auswählen eines Anregungsfilters (134);
• Auswählen eines Emissionsfilters (136);
• Auswählen einer Emissionswellenlänge oder eines Wellenlängenbereichs;
• Auswählen einer Detektionswellenlänge oder eines Wellenlängenbereichs
• Parametrieren eines Spektralentmischungsalgorithmus;
• Einstellen oder Einschränken einer Anregungsintensität;
• Parametrieren von Optimierungsfunktionen;
• Einstellen oder Einschränken von Parametern für eine Mehrschicht-/3D-/Z-Stack-Bildaufnahmefunktion;
• Einstellen oder Einschränken von Umgebungsbedingungen an der Probe (160);
• Auswählen eines Mikroskopobjektivs (170) oder Einschränken der Verwendung verfügbarer Mikroskopobjektive;
• Auswählen eines Interessensbereichs in der Probe (160);

7. Steuerungseinheit (180) nach einem der vorstehenden Ansprüche, wobei die Steuerungseinheit (180), abhängig von den empfangenen Informationen über die Probe, weiter dazu konfiguriert ist, mindestens einen der Detektorparameter eines Bildaufnahmedetektors (140) des Mikroskops einzustellen oder einzuschränken, insbesondere
wobei der mindestens eine Detektorparameter mindestens einen der folgenden Parameter einschließt: eine Integrationszeit, eine Empfindlichkeit, eine Verstärkung, eine Belichtungszeit, ein Offset, eine Bildverarbeitungsfunktion, wie Binning, des Bildaufnahmedetektors (140) des Mikroskops (102).

8. Steuerungseinheit (180) nach einem der vorstehenden Ansprüche, soweit sie von den Ansprüchen 5 und 6 abhängt, wobei mindestens eine Mikroskopkomponente automatisch justiert wird, abhängig von mindestens einer von der Zuordnung der aufgenommenen Bilder zu einem Projekt und/oder einer Untersuchungsserie und einem Probennamen, der die Bezeichnung der zu untersuchenden Probe oder des Probentyps beschreibt.

9. Steuerungseinheit (180) nach einem der vorstehenden Ansprüche, soweit sie von den Ansprüchen 5 und 6 abhängt, wobei abhängig von der Art des Probenträgers mindestens eine der folgenden Justierungen der Mikroskopkomponenten vorgenommen wird:
• Einstellen oder Einschränken von Parametern eines motorisierten Objekttisches (162);
• Einstellen, Parametrieren oder Einschränken einer Autofokusfunktion;
• Auswählen des Objektivs (170) oder Einschränken der Verwendung verfügbarer Objektive (170).

10. Steuerungseinheit (180) nach einem der vorstehenden Ansprüche, soweit sie von den Ansprüchen 5 und 6 abhängt, wobei, abhängig von der möglichen Position, Anordnung und/oder den Abmessungen der Probe auf dem Probenträger, mindestens eine der folgenden Justierungen der Mikroskopkomponenten vorgenommen wird:
• Einstellen, Parametrieren oder Einschränken einer Autofokusfunktion;
• Einstellen oder Einschränken von Parametern für eine Mehrschicht-/3D-/Z-Stack-Bildaufnahmefunktion;
• Auswählen eines Mikroskopobjektivs (170) oder Einschränken der Verwendung verfügbarer Mikroskopobjektive;
• Auswählen eines Interessensbereichs in der Probe (160).

11. Steuerungseinheit (180) nach einem der vorstehenden Ansprüche, soweit sie von den Ansprüchen 5 und 6 abhängt, wobei, wenn die Probe als eine "fixierte Probe" oder eine "Iebende Probe" charakterisiert wird, mindestens eine der folgenden Justierungen der Mikroskopkomponenten zusätzlich zu den in Anspruch 1 definierten Justierungen vorgenommen wird:
• Einstellen oder Einschränken der Anregungs- oder Beleuchtungsintensität;
• Parametrieren von Optimierungsfunktionen;
• Einstellen oder Einschränken von Parametern für eine Mehrschicht-/3D-/Z-Stack-Bildaufnahmefunktion;
• Einstellen oder Einschränken der Umgebungsbedingungen an der Probe;
• Auswählen des Objektivs (170) oder Einschränken der Verwendung verfügbarer Objektive.

12. Steuerungseinheit (180) nach einem der vorstehenden Ansprüche, soweit sie von den Ansprüchen 5 und 6 abhängt, wobei, abhängig von in der Probe (160) verwendeten Farbstoff(en), mindestens eine der folgenden Justierungen der Mikroskopkomponenten vorgenommen wird:
• Auswählen einer Anregungswellenlänge oder eines Wellenlängenbereichs;
• Auswählen eines Anregungsfilters (134);
• Auswählen eines Emissionsfilters (136);
• Auswählen eines Emissionswellenlängenbereichs;
• Parametrieren eines Entmischungsalgorithmus;
• Parametrieren von Optimierungsfunktionen.

13. Mikroskopsystem (100), umfassend ein Mikroskop (102) und eine Steuerungseinheit (180) nach einem der Ansprüche 1 bis 12, zum Justieren der Mikroskopkomponenten (174, 162, 170, 176, 130, 120) des Mikroskops (102).

14. Verfahren zum Steuern eines Mikroskops (102), wobei das Verfahren Folgendes umfasst: in einem ersten Schritt, Empfangen (304), durch eine Steuerungseinheit (180) für das Mikroskop (102), Informationen über eine durch das Mikroskop (102) zu untersuchende Probe; und
abhängig von den empfangenen Informationen, in einem zweiten Schritt, automatisches Justieren (306) einer oder mehrerer Mikroskopkomponenten (174, 162, 170, 176, 130, 120) des Mikroskops (102) zum Untersuchen der Probe,
wobei die Informationen über die Probe (160) Folgendes umfassen:
• Charakterisierung als lebende oder nichtlebende Probe;
wobei die Justierung einer oder mehrerer Mikroskopkomponenten Folgendes umfasst:
• Einstellen oder Einschränken von Parametern eines motorisierten Objekttisches (162); und
• Einstellen, Parametrieren oder Einschränken einer Autofokusfunktion.

15. Computerprogramm mit Programmcode zum Durchführen des Verfahrens nach Anspruch 14, wenn das Computerprogramm auf einem Prozessor (186) ausgeführt wird, der der Steuerungseinheit (180) nach einem der Ansprüche 1 bis 12 zugeordnet ist.

## Revendications

1. Unité de commande (180) pour un microscope (102) destiné à examiner un échantillon (160), l'unité de commande (180) comprenant :
une interface utilisateur (182) configurée pour recevoir des informations concernant l'échantillon ; et dans laquelle l'unité de commande est configurée pour, ultérieurement,
en fonction des informations reçues, ajuster automatiquement un ou plusieurs composants de microscope (174, 162, 170, 176, 130, 120) du microscope (102),
dans laquelle les informations concernant l'échantillon (160) comprennent :
• la caractérisation comme échantillon vivant ou non vivant ;
dans laquelle l'ajustement d'un ou plusieurs composants de microscope comprend :
• le réglage ou la restriction de paramètres d'une platine motorisée (162) ; et
• le réglage, le paramétrage ou la restriction d'une fonction de mise au point automatique.

2. Unité de commande (180) selon la revendication 1, configurée pour, en fonction des informations reçues, choisir automatiquement une valeur prédéterminée pour un réglage d'au moins un des composants de microscope.

3. Unité de commande (180) selon la revendication 1 ou revendication 2, configurée pour, en fonction des informations reçues, restreindre les valeurs possibles pour un réglage d'au moins un des composants de microscope, en particulier
dans laquelle, par la restriction des valeurs possibles, un utilisateur et/ou l'unité de commande est limité à ne choisir que parmi des valeurs non exclues pour le réglage d'au moins un des composants de microscope, en particulier
dans laquelle l'unité de commande (180) est configurée pour, sur la base d'une mesure de l'échantillon, choisir une valeur différente pour le réglage d'au moins un des composants de microscope mais uniquement parmi des valeurs non exclues.

4. Unité de commande (180) selon l'une quelconque des revendications précédentes pour autant qu'elle dépende de la revendication 2, dans laquelle la valeur prédéterminée pour un réglage d'au moins un des composants de microscope est au moins une variable d'au moins une fonction arithmétique et/ou dans laquelle la valeur prédéterminée pour un réglage d'au moins un des composants de microscope est au moins une variable d'au moins une fonction d'optimisation de rétroaction.

5. Unité de commande (180) selon l'une quelconque des revendications précédentes, dans laquelle les informations concernant l'échantillon (160) comprennent en outre au moins l'un des éléments suivants :
• l'affectation des images acquises à un projet et/ou à une série d'examens ;
• la désignation de l'échantillon ou du type d'échantillon devant être examiné ;
• le type de support d'échantillon ;
• la position, l'agencement et/ou les dimensions possibles de l'échantillon sur le support d'échantillon ;
• les colorants utilisés sur l'échantillon ;
• la désignation des structures correspondantes dans l'échantillon coloré.

6. Unité de commande (180) selon l'une quelconque des revendications précédentes, dans laquelle l'ajustement d'un ou plusieurs composants de microscope comprend en outre au moins l'un des ajustements suivants :
• la sélection d'une longueur d'onde d'excitation ou d'une plage de longueurs d'onde ;
• la sélection d'un filtre d'excitation (134) ;
• la sélection d'un filtre d'émission (136) ;
• la sélection d'une longueur d'onde d'émission ou d'une plage de longueurs d'onde d'émission ;
• la sélection d'une longueur d'onde de détection ou d'une plage de longueurs d'onde de détection ;
• le paramétrage d'un algorithme de démélange spectral ;
• le réglage ou la restriction d'une intensité d'excitation ;
• le paramétrage de fonctions d'optimisation ;
• le réglage ou la restriction de paramètres pour une fonction d'acquisition d'images multicouche/3D/d'empilement en z ;
• le réglage ou la restriction de conditions environnementales au niveau de l'échantillon (160) ;
• la sélection d'un objectif (170) de microscope ou la restriction de l'utilisation des objectifs de microscope disponibles ;
• la sélection d'une région d'intérêt dans l'échantillon (160).

7. Unité de commande (180) selon l'une quelconque des revendications précédentes, dans laquelle, en fonction des informations reçues sur l'échantillon, l'unité de commande (180) est en outre configurée pour régler ou restreindre au moins un des paramètres du détecteur d'acquisition d'images (140) du microscope, en particulier dans laquelle l'au moins un paramètre de détecteur inclut au moins l'un des paramètres suivants : un temps d'intégration, une sensibilité, un gain, un temps d'exposition, un décalage, une fonction de traitement d'image telle que le compartimentage, du détecteur d'acquisition d'images (140) du microscope (102).

8. Unité de commande (180) selon l'une quelconque des revendications précédentes, pour autant qu'elle dépende des revendications 5 et 6, dans laquelle au moins un composant de microscope est ajusté automatiquement en fonction d'au moins l'un parmi l'affectation des images acquises à un projet et/ou à une série d'examens et un nom d'échantillon décrivant la désignation de l'échantillon ou du type d'échantillon devant être examiné.

9. Unité de commande (180) selon l'une quelconque des revendications précédentes, pour autant qu'elle dépende des revendications 5 et 6, dans laquelle, en fonction du type de support d'échantillon, au moins un des ajustements de composant de microscope suivants est effectué :
• le réglage ou la restriction de paramètres d'une platine motorisée (162) ;
• le réglage, le paramétrage ou la restriction d'une fonction de mise au point automatique ;
• la sélection de l'objectif (170) ou la restriction de l'utilisation des objectifs (170) disponibles.

10. Unité de commande (180) selon l'une quelconque des revendications précédentes, pour autant qu'elle dépende des revendications 5 et 6, dans laquelle, en fonction de la position, de l'agencement et/ou des dimensions possibles de l'échantillon sur le support d'échantillon, au moins un des ajustements de composants de microscope suivants est effectué :
• le réglage, le paramétrage ou la restriction d'une fonction de mise au point automatique ;
• le réglage ou la restriction de paramètres pour une fonction d'acquisition d'images multicouche/3D/d'empilement en z ;
• la sélection d'un objectif (170) de microscope ou la restriction de l'utilisation des objectifs de microscope disponibles ;
• la sélection d'une région d'intérêt dans l'échantillon (160).

11. Unité de commande (180) selon l'une quelconque des revendications précédentes, pour autant qu'elle dépende des revendications 5 et 6, dans laquelle, lorsque l'échantillon est caractérisé comme un « échantillon fixe » ou un « échantillon vivant », au moins un des ajustements de composant de microscope suivants est effectué en outre des ajustements définis dans la revendication 1 :
• le réglage ou la restriction de l'intensité d'excitation ou d'éclairage ;
• le paramétrage de fonctions d'optimisation ;
• le réglage ou la restriction de paramètres pour une fonction d'acquisition d'images multicouche/3D/d'empilement en z ;
• le réglage ou la restriction des conditions environnementales au niveau de l'échantillon ;
• la sélection de l'objectif (170) ou la restriction de l'utilisation des objectifs disponibles.

12. Unité de commande (180) selon l'une quelconque des revendications précédentes, pour autant qu'elle dépende des revendications 5 et 6, dans laquelle, en fonction de colorant(s) utilisé(s) dans l'échantillon (160), au moins un des ajustements de composant de microscope suivants est effectué :
• la sélection d'une longueur d'onde d'excitation ou d'une plage de longueurs d'onde ;
• la sélection d'un filtre d'excitation (134) ;
• la sélection d'un filtre d'émission (136) ;
• la sélection d'une plage de longueurs d'onde d'émission ;
• le paramétrage d'un algorithme de démélange ;
• le paramétrage de fonctions d'optimisation.

13. Système (100) de microscope comprenant un microscope (102) et une unité de commande (180) selon l'une quelconque des revendications 1 à 12 pour ajuster des composants de microscope (174, 162, 170, 176, 130, 120) du microscope (102).

14. Procédé de commande d'un microscope (102), le procédé comprenant : dans une première étape, la réception (304), par une unité de commande (180) pour le microscope (102), d'informations concernant un échantillon devant être examiné par le microscope (102) ; et
en fonction des informations reçues, dans une deuxième étape, l'ajustement automatique (306) d'un ou plusieurs composants de microscope (174, 162, 170, 176, 130, 120) du microscope (102) pour examiner l'échantillon,
dans lequel les informations concernant l'échantillon (160) comprennent :
• la caractérisation comme échantillon vivant ou non vivant ;
dans lequel l'ajustement d'un ou plusieurs composants de microscope comprend :
• le réglage ou la restriction de paramètres d'une platine motorisée (162) ; et
• le réglage, le paramétrage ou la restriction d'une fonction de mise au point automatique.

15. Programme informatique avec un code de programme pour mettre en œuvre le procédé selon la revendication 14 lorsque le programme informatique est mis en œuvre sur un processeur (186) associé à l'unité de commande (180) selon l'une quelconque des revendications 1 à 12.
